# EUROPEAN PATENT APPLICATION

(11) **EP 3 633 635 A1**
(43) Date of publication of application: **08.04.2020**
(21) Application number: 17911603.3
(22) Date of filing: 20.10.2017
(51) Int. Cl.: G07F 11/00, G07F 11/62, G06K 7/10, G07F 9/02, G06Q 20/18, G06Q 30/06

(54) **SELF-SERVICE VENDING METHOD AND DEVICE, VENDING TERMINAL, AND SELF-SERVICE VENDING SYSTEM**

(30) Priority: 31.05.2017 CN 201710401286
(71) Applicant: Shenzhen Genuine Innovative Technology Co., Ltd, Shenzhen, Guangdong 518000 (CN)
(72) Inventor: LI,Wenhua, Shenzhen Guangdong 518000 (CN)
(74) Representative: Heimdal, Pär
(86) International application number: PCT/CN2017/107142
(87) International publication number: WO 2018/218854

(57) **Abstract**

A method (700) and a device (300) for automatic vending, a vending terminal (13), and a system (100) for automatic vending. Wherein, the method (700) for automatic vending is applied to a vending container (200), the vending container (200) is provided with a plurality of vending lattices (21), each of the vending lattices (21) is provided with a tag scanning module (11). The method (700) for automatic vending includes: (71) pausing scanning by the tag scanning module (11) in the vending lattice (21) when it is detected that a first commodity in the vending lattice (21) is moved out of a target region; (72) detecting whether a second commodity re-arranged in the vending lattice (21) is the first commodity; (73) detecting whether a tag of the first commodity is damaged if the second commodity re-arranged in the vending lattice is the first commodity; (75) generating order information of the first commodity if the tag of the first commodity is damaged; and sending the order information of the first commodity to a server (12), such that the server (12) deducts fees of the first commodity from an account of a user according to the order information of the first commodity. With the method (700), the fees of the first commodity may be accurately deduced, and some cheating behaviors during the purchase may be prevented.

## Description

### TECHNICAL FIELD

The present application relates to the technical field of automatic vending machines, and in particular, relates to a method and a device for automatic vending, a vending terminal, and a system for automatic vending.

### BACKGROUND

Automatic vending is a novel retailing form in which commodity transactions are carried out via a vending machine. The automatic vending is widely recognized by people and has a great prospect of application and development because of the advantages such as no man supervision, high technology content, novel sale manner, practical commodity price, unrestricted working time and space, quickness and convenience and the like.

When a user acquires a voucher, a traditional automatic vending machine may assign an authority to the user via the voucher, and thus the user may purchase a desired commodity from the automatic vending machine.

During practice of the present application, the inventors have identified that the related art at least has the following problem: since the process in which the user operates in front of the traditional automatic vending machine is not effectively monitored, some users may conduct some malicious cheating behaviors to avoid payment. For example, the user takes away a bottle of soda water from a vending lattice A and drinks half of the bottle, and then place the half bottle of soda water back to the vending lattice A. As such, the background system fails to deduce fees from the account of the user. Still for example, the user transfers a bottle of purified water from a vending lattice B to the vending lattice A, and sticks the tag of the soda water to the bottle of purified water. As such, the user actually consumes expensive soda water but the background system only deducts fees of the cheap purified water.

### SUMMARY

Embodiments of the present application are intended to provide a method and a device for automatic vending, a vending terminal, and a system for automatic vending, which solve the technical problem that in a traditional method for automatic vending, practical consumption of commodities by users is not identified and thus fees reduction is not performed.

To solve the above technical problem, embodiments of the present application provide the following technical solutions:
In a first aspect, embodiments of the present application provide a method for automatic vending, applied to a vending container, the vending container is provided with a plurality of vending lattices, each of the vending lattices is provided with a tag scanning module; wherein the method for automatic vending includes: pausing scanning by the tag scanning module in the vending lattice when it is detected that a first commodity is moved out of a target region; detecting whether a second commodity re-arranged in the vending lattice is the first commodity; detecting whether a tag of the first commodity is damaged if the second commodity re-arranged in the vending lattice is the first commodity; generating order information of the first commodity if the tag of the first commodity is damaged; and sending the order information of the first commodity to a server, such that the server deducts fees of the first commodity from an account of a user according to the order information of the first commodity.

Optionally, the detecting whether a second commodity re-arranged in the vending lattice is the first commodity includes: acquiring image information of the second commodity and pre-stored image information of the first commodity when it is detected that the second commodity is re-arranged in the vending lattice; determining whether the image information of the second commodity matches the pre-stored image information of the first commodity; determining that the second commodity re-arranged in the vending lattice is the first commodity if the image information of the second commodity matches the pre-stored image information of the first commodity; and determining that the second commodity re-arranged in the vending cabinet is not the first commodity if the image information of the second commodity does not match the pre-stored image information of the first commodity.

Optionally, when it is determined that the second commodity re-arranged in the vending lattice is not the first commodity, the method further includes: detecting whether a tag of the second commodity is damaged; generating order information of the second commodity if the tag of the second commodity is damaged; and sending the order information of the second commodity to the server, such that the server deducts fees of the second commodity from the account of the user according to the order information of the second commodity.

Optionally, the method further includes: updating a corresponding relationship between the vending lattice and the second commodity according to the tag of the second commodity if the tag of the second commodity is not damaged; and re-triggering scanning by the tag scanning module in the vending lattice.

Optionally, the method further includes: re-triggering scanning by the tag scanning module in the vending lattice if the tag of the first commodity is not damaged.

In a second aspect, embodiments of the present application provide a device for automatic vending, applied to a vending container, the vending container is provided with a plurality of vending lattices, each of the vending lattices is provided with a tag scanning module; wherein the device for automatic vending includes: a pausing module, configured to pause scanning by the tag scanning module in the vending lattice when it is detected that a first commodity is moved out of a target region; a first detecting module, configured to detect whether a second commodity re-arranged in the vending lattice is the first commodity; a second detecting module, configured to detect whether a tag of the first commodity is damaged if the second commodity re-arranged in the vending lattice is the first commodity; a first generating module, configured to generate order information of the first commodity if the tag of the first commodity is damaged; and a first sending module, configured to send the order information of the first commodity to a server, such that the server deducts fees of the first commodity from an account of a user according to the order information of the first commodity.

Optionally, the first detecting module includes: a first acquiring unit, configured to acquire image information of the second commodity and pre-stored image information of the first commodity when it is detected that the second commodity is re-arranged in the vending lattice; a judging unit, configured to judge whether the image information of the second commodity matches the pre-stored image information of the first commodity; a first determining unit, configured to determine that the second commodity re-arranged in the vending lattice is the first commodity if the image information of the second commodity matches the pre-stored image information of the first commodity; and a second determining unit, configured to determine that the second commodity re-arranged in the vending lattice is not the first commodity if the image information of the second commodity does not match the pre-stored image information of the first commodity.

Optionally, the device further includes: a third detecting module, configured to detect whether a tag of the second commodity is damaged; a second generating module, configured to generate order information of the second commodity if the tag of the second commodity is damaged; a second sending module, configured to send the order information of the second commodity to the server, such that the server deducts fees of the second commodity from the account of the user according to the order information of the second commodity.

Optionally, the device further includes: an updating module, configured to update a corresponding relationship between the vending lattice and the second commodity according to the tag of the second commodity if the tag of the second commodity is not damaged; and a first triggering module, configured to re-trigger scanning by the tag scanning module in the vending lattice.

Optionally, the device further includes: a second triggering module, configured to re-trigger scanning by the tag scanning module in the vending lattice if the tag of the first commodity is not damaged.

In a third aspect, embodiments of the present application provide a vending terminal, the vending terminal includes: at least one processor; and a memory communicably connected to the at least one processor; wherein the memory stores instructions executable by the at least one processor, wherein the instructions, when being executed by the at least one processor, cause the at least one processor to perform the method for automatic vending as described above.

In a fourth aspect, embodiments of the present application provide a non-transitory computer readable storage medium; wherein the computer readable storage medium stores computer executable instructions, which, when being executed by a computer, cause the computer to perform the method for automatic vending as described above.

In a fifth aspect, embodiments of the present application provide a system for automatic vending, applied to a vending container, the vending container is provided with a plurality of vending lattices; wherein the system includes: a tag scanning module, arranged in each of the vending lattices and configured to scan a tag of a commodity; a vending terminal as described above; and a server, configured to, in response to a verification request sent by a mobile terminal, send a verification code to the mobile terminal according to the verification request, such that the vending terminal opens a door of the vending lattice according to the verification code.

In various embodiments of the present application, scanning by the tag scanning module in the vending lattice is paused when it is detected that a first commodity is moved out of a target region; whether a second commodity re-arranged in the vending lattice is the first commodity is detected; whether a tag of the first commodity is damaged is detected if the second commodity re-arranged in the vending lattice is the first commodity; order information of the first commodity is generated if the tag of the commodity is damaged; and the order information of the first commodity is sent to a server, such that the server deducts fees of the first commodity from an account of a user according to the order information of the first commodity. Therefore, in one aspect, when the user really consumes the first commodity, the tag of the first commodity may be damaged, and the damaged tag indicates that the user consumes the commodity. Therefore, the fees of the first commodity may be deduced from the account of the user. In another aspect, when the user exchanges commodities in different vending lattices, and the fees are accurately deduced by detecting whether the re-arranged second commodity is consistent with the first commodity.

### BRIEF DESCRIPTION OF THE DRAWINGS

One or more embodiments are illustrated by way of example, and not by limitation, in the figures of the accompanying drawings, wherein components having the same reference numeral designations represent like components throughout. The drawings are not to scale, unless otherwise disclosed.
FIG. 1 is a schematic structural diagram of an system for automatic vending according to an embodiment of the present application;
FIG. 2 is a schematic structural diagram of a vending container according to an embodiment of the present application;
FIG. 3 is a schematic structural diagram of a device for automatic vending according to an embodiment of the present application;
FIG. 3a is a schematic structural diagram of a first detecting module in FIG. 3;
FIG. 4 is a schematic structural diagram of a device for automatic vending according to another embodiment of the present application;
FIG. 5 is a schematic structural diagram of a device for automatic vending according to another embodiment of the present application;
FIG. 6 is a schematic structural diagram of a device for automatic vending according to another embodiment of the present application;
FIG. 7 is a schematic flowchart of a method for automatic vending according to an embodiment of the present application;
FIG. 8 is a schematic flowchart of step 72 in FIG. 7; and
FIG. 9 is a schematic structural diagram of a vending terminal according to an embodiment of the present application.

### DETAILED DESCRIPTION

To make the objective, technical solution, and advantages of the present application clearer, the present application is further described with reference to specific embodiments and attached drawings. It should be understood that the specific embodiments described herein are only intended to explain the present application instead of limiting the present application.

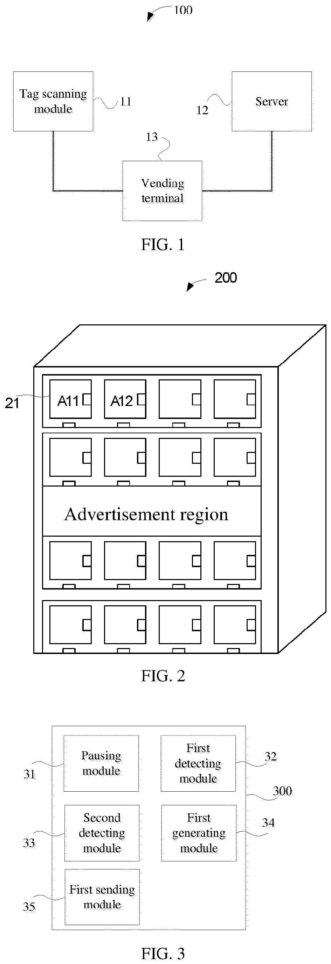

Referring to FIG. 1, this embodiment provides a system for automatic vending 100. The system for automatic vending 100 includes a tag scanning module 11, a server 12 and a vending terminal 13. The vending terminal 13 is connected to the tag scanning module 11 and the server 12 respectively in a wired manner or a wireless manner.

Referring to FIG. 2, the system for automatic vending 100 as illustrated in FIG. 1 is applied to a vending container 200. The vending container 200 is provided with a plurality of vending lattices 21. Optionally, the vending lattices 21 are arranged in a sequence, and a unique serial number is assigned to each of the vending lattices 21. For example, the serial number of the vending lattice in the first row and the first column is A11, and the serial number of the vending lattice in the first row and the second column is A12. In some applications, a merchant may exhibit the commodities based on regions according to categories of the commodities in the vending container 200.

The serial number of each of the vending lattices 21 corresponds to the commodity arranged in the vending lattice, and this corresponding relationship is recorded in a background system. For example, if the commodity in the vending lattice 21 with the serial number A11 is beer, a corresponding relationship therebetween is All-beer.

Each of the vending lattices 21 is equipped with an electronic lock. After a user acquires a voucher, the electronic lock is opened, such that the user picks up the commodity arranged in the vending lattice 21.

The tag scanning module 11 is arranged in each of the vending lattices 21, and the tag scanning module 11 is configured to scan tags of the commodities. The tag of a commodity is used to identify price, name, category and the like information of the commodity, which may be a Radio Frequency Identification (RFID) tag, a barcode or the like. Correspondingly, the tag scanning module 11 may be an RFID scanner, a barcode scanner or the like.

The server 12 may be a local server, or may be a cloud-end server. The server 12 may complete user verification or process orders. The server 12 may be a physical entity server or a logic server virtualized by a plurality of physical servers. The server 12 may also be a server cluster formed by a plurality of servers that are in interconnection and communication.

The vending terminal 13 is arranged in the vending container 200, and may cooperate with the server 12 to complete the user's purchase action. In some applications, the vending terminal 13 includes a Bluetooth module, a communication module, a monitoring module, a power module, an alarm module and a control module; wherein the control module is connected to the Bluetooth module, the communication module, the monitoring module, the power module and the alarm module respectively.

Hereinafter, based on the system for automatic vending 100 and the vending container 200 described in the above embodiment, an automatic vending process is described in detail as follows:
A mobile terminal 14 of a user is equipped with an automatic vending App, the user is registered in the automatic vending App and obtains an account and passwords thereof, and the user may log in to the App via the account and passwords thereof.

The vending container 200 or each of the vending lattices 21 is provided with a two-dimensional code for container identification.

During consuming, firstly, the user opens the automatic vending App on the mobile terminal 14, and scans the two-dimensional for container identification and thus sends a verification request to the server 12. In the meantime, the tag scanning module 11 constantly scans commodities with tags at a predetermined frequency.

In response to the verification request sent by the mobile terminal 14, the server 12 sends a verification code to the automatic vending App on the mobile terminal 14 according to the verification request. The mobile terminal 14 sends the verification code to the Bluetooth module of the vending terminal 13 via a Bluetooth module of the mobile terminal. The control module receives the verification code, and opens the electronic lock of the vending lattice 21. In this way, the user may pick up the desired commodity from the vending lattice 21. When the user picks up the desired commodity and leaves a target region, since the tag scanning module 11 experiences from the case of constantly scanning the tag of the desired commodity to the case of failing to scanning the tag of desired commodity, the tag scanning module 11 may send tag data to the control module, wherein the tag data includes information of the desired commodity in the vending lattice.

The control module generates order information according to the tag data, and sends the order information to the server 12 via the communication module, such that the server 12 deducts fees from the account of the user according to the order information.

The above embodiment describes an automatic vending process. However, as described above, since the process in which the user operates in front of the automatic vending machine is not effectively monitored, some users may conduct some malicious cheating behaviors. Accordingly, the embodiments of the present application provide the following implementation manners to solve or further solve the problem, or make some improvements.

Firstly, a vending terminal pauses scanning by a tag scanning module in a vending lattice when it is detected that a first commodity is moved out of a target region. As described above, the tag scanning module in the vending lattice constantly scans the first commodity with the tag according to a specific frequency, and the tag scanning module has a specific scanning range. The scanning range may be the target region. When the tag scanning module fails to scan the tag of the first commodity within a time period, the tag scanning module sends tag data to the vending terminal. The vending terminal detects that the first commodity in the vending lattice is moved out of the target region according to the tag data. In this case, to save power consumption, the vending terminal pauses scanning by the tag scanning module. Herein, the tag data may include commodity information, for example, price, name, category and the like of the first commodity.

The above embodiment only describes one optional manner of detecting whether the first commodity is moved away from the target region by the vending terminal. Nevertheless, other alternative detection manners may also be used. For example, a camera is arranged in the vending lattice, wherein the camera photographs the target region of the vending lattice according to a predetermined frequency. When an image indicating that the user moves out the first commodity is picked up by the camera, the vending terminal parses an image of the first commodity by using an image analysis algorithm, so as to acknowledge that the first commodity is moved out.

As described above, when the user exchanges commodities in different vending lattices, to prevent some cheating behaviors, the vending terminal needs to detect whether a second commodity re-arranged in the vending lattice is the first commodity. In some embodiments, the vending terminal may detects whether the second commodity is re-arranged in the vending lattice by virtue of image analysis or pressure sensing. For example, the camera picks up again images in the vending lattices. When the vending terminal detects features of a commodity, it is considered that the second commodity is re-arranged in the vending lattice. Still for example, when the second commodity is re-arranged in the vending lattice, a pressure sensor arranged at the bottom of the vending lattice detects a change of pressure. In this case, the vending terminal may consider that the second commodity is re-arranged in the vending lattice according to pressure change data fed back by the pressure sensor.

The second commodity may be the first commodity or may not be the first commodity. For example, the first commodity is purified water, and the second commodity is soda water. When the second commodity is the first commodity, the second commodity and the first commodity may belong to the same product series. For example, the first commodity is purified water with a white package, and the second commodity is purified water with a red package, but both the first commodity and the second commodity belong to the same category, purified water.

It should be noted that herein the terms "first" and "second" used as modifiers of commodities are merely intended to differentiate a sequence of arranging or picking up the commodities, and corresponding commodities based on the sequence of arranging or picking up the commodities.

The vending terminal may detect whether the second commodity re-arranged in the vending lattice is the first commodity by using the following manner: the camera photographs image information of the re-arranged second commodity, the vending terminal acquires the image information of the second commodity from the camera, and then the vending terminal calls pre-stored image information of the first commodity corresponding to the vending lattice. Further, the vending terminal judges whether the image information of the second commodity matches the pre-stored information of the first commodity by virtue of an image analysis algorithm. If the image information of the second commodity matches the pre-stored information of the first commodity, the vending terminal determines that the second commodity re-arranged in the vending lattice is the first commodity. If the image information of the second commodity does not match the pre-stored image information of the first commodity, the vending terminal determines that the second commodity re-arranged in the vending cabinet is not the first commodity. The image analysis algorithm herein is well known by a person skilled in the art, which is thus not described herein any further.

Afterwards, when the vending terminal detects that the second commodity re-arranged in the vending lattice is the first commodity, the vending terminal further detects whether the tag of the first commodity is damaged. As described above, the tag scanning module constantly scans the tag of the commodity arranged in the vending lattice. When it is detected that the second commodity is re-arranged in the vending lattice and the second commodity is the first commodity, if the tag scanning module fails to receive feedback information of the tag of the first commodity, the tag scanning module sends information indicating that "the tag of the first commodity is damaged" to the vending terminal, and then the vending terminal generates order information of the first commodity. If the tag of the first commodity is not damaged, the vending terminal re-triggers scanning by the tag scanning module in the vending lattice.

If the tag of the first commodity is damaged, the user has actually consumed the first commodity. For ease of identifying the behavior of consuming the commodity by the user, the tag of the first commodity is arranged on an opening position of the first commodity. The opening position herein may be understood as a position that needs to be operated by the user for using the commodity. For example, for bottled water, the opening position is a bottom cover of the bottled water. For cigarettes, the opening position is an opening of the cigarette box. When the user consumes the commodity, the tag arranged on the opening position is damaged, and hence the tag scanning module fails to scan the tag of the commodity.

In some embodiments, to prevent malicious exchange of the tags of different commodities, the manager may use some fragile tags as the tags of the commodities. For example, the tag of the commodity includes a substrate and a signal circuit arranged on a side of the substrate. The substrate includes a release paper layer, a self-adhesive layer, a metal-resistant layer and a fragile paper layer that are sequentially arranged. When the user transfers the tag, the fragile paper layer is easily broken such that the signal circuit is damaged. Therefore, the tag is damaged.

The order information of the first commodity includes price, name, category, quantity and the like of the first commodity.

Finally, the vending terminal sends the order information of the first commodity to a server, such that the server deducts fees of the first commodity from an account of a user according to the order information of the first commodity.

In summary, in one aspect, when the user really consumes the first commodity, the tag of the first commodity may be damaged, and the damaged tag indicates that the user consumes the commodity. Therefore, the fees of the first commodity may be deduced from the account of the user. In another aspect, when the user exchanges commodities in different vending lattices, and the fees are accurately deduced by judging whether the re-arranged second commodity is consistent with the first commodity.

As described above, when it is determined that the second commodity re-arranged in the vending lattice is not the first commodity, the vending terminal detects whether the tag of the second commodity is damaged, and generates order information of the second commodity if the tag of the second commodity is damaged. The vending terminal sends the order information of the second commodity to the server, such that the server deducts fees of the second commodity from an account of a user according to the order information of the second commodity.

As described above, if the tag of the second commodity is not damaged, the vending terminal updates a corresponding relationship between the vending lattice and the second commodity according to the tag of the second commodity, such that the vending terminal subsequently quickly determines commodity information of the second commodity according to the serial number of the vending lattice, and thus re-generates order information. For example, at the first time, the serial number 11 of the vending lattice corresponds to the first commodity, and in this case, the corresponding relationship is 11-first commodity. After re-arrangement of the second commodity, the corresponding relationship is: 11-second commodity. After the corresponding relationship between the vending lattice and the second commodity is updated, scanning by the tag scanning module in the vending lattice is re-triggered.

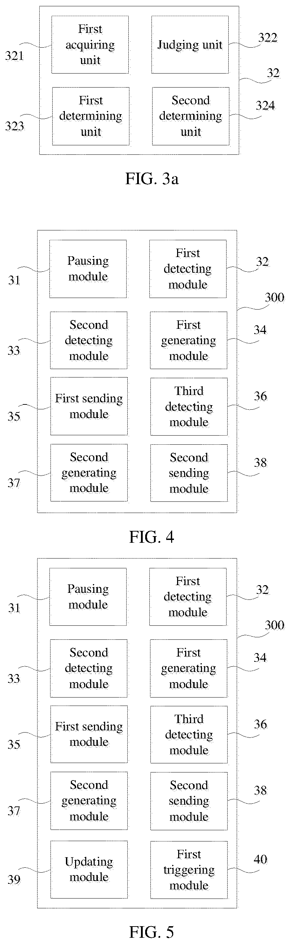

In another aspect, the embodiments of the present application further provide a device for automatic vending 300, which is applied to a vending container. The vending container is provided with a plurality of vending lattices, wherein each of the vending lattices is provided with a tag scanning module. As illustrated in FIG. 3, the device for automatic vending 300 includes: a pausing module 31, a first detecting module 32, a second detecting module 33, a first generating module 34 and a first sending module 35.

The pausing module 31 is configured to pause scanning by the tag scanning module in the vending lattice when it is detected that a first commodity is moved out of a target region. As described above, the tag scanning module in the vending lattice constantly scans the first commodity with the tag according to a specific frequency, and the tag scanning module has a specific scanning range. The scanning range may be the target region. When the tag scanning module fails to scan the tag of the first commodity within a time period, the tag scanning module sends tag data to the vending terminal. The pausing module 31 detects that the first commodity in the vending lattice is moved out of the target region according to the tag data. In this case, to save power consumption, the pausing module 31 pauses scanning by the tag scanning module. Herein, the tag data may include commodity information, for example, price, name, category and the like of the first commodity.

The above embodiment only describes one optional manner of detecting whether the first commodity is moved away from the target region by the pausing module 31. Nevertheless, other alternative detection manners may also be used. For example, a camera is arranged in the vending lattice, wherein the camera photographs the target region of the vending lattice according to a predetermined frequency. When an image indicating that the user moves out the first commodity is picked up by the camera, the pausing module 31 parses an image of the first commodity by using an image analysis algorithm, so as to acknowledge that the first commodity is moved out.

The first detecting module 32 is configured to detect whether a second commodity re-arranged in the vending lattice is the first commodity. In some embodiments, the first detecting module 32 may detect whether the second commodity is re-arranged in the vending lattice by virtue of image analysis or pressure sensing. For example, the camera picks up again images in the vending lattices. When the first detecting module 32 detects features of a commodity according to the image, it is considered that the second commodity is re-arranged in the vending lattice. Still for example, when the second commodity is re-arranged in the vending lattice, a pressure sensor arranged at the bottom of the vending lattice detects a change of pressure. In this case, the first detecting module 32 may consider that the second commodity is re-arranged in the vending lattice according to pressure change data fed back by the pressure sensor.

In some embodiments, as illustrated in FIG. 3a, the first detecting module 32 includes: a first acquiring unit 321, a judging unit 322, a first determining unit 323 and a second determining module 324. The first acquiring unit 321 is configured to acquire image information of the second commodity and pre-stored image information of the first commodity when it is detected that the second commodity is re-arranged in the vending lattice. The judging unit 322 is configured to judge whether the image information of the second commodity matches the pre-stored image information of the first commodity. The first determining unit 323 is configured to determine that the second commodity re-arranged in the vending lattice is the first commodity if the image information of the second commodity matches the pre-stored image information of the first commodity. The second determining unit 324 is configured to determine that the second commodity re-arranged in the vending lattice is not the first commodity if the image information of the second commodity does not match the pre-stored image information of the first commodity.

The second detecting module 33 is configured to detect whether a tag of the first commodity is damaged if the second commodity re-arranged in the vending lattice is the first commodity. As described above, the tag scanning module constantly scans the tag of the commodity arranged in the vending lattice. When it is detected that the second commodity is re-arranged in the vending lattice and the second commodity is the first commodity, if the tag scanning module fails to receive feedback information of the tag of the first commodity, the tag scanning module sends information indicating that "the tag of the first commodity is damaged" to the vending terminal, and then the vending terminal generates order information of the first commodity.

If the tag of the first commodity is damaged, the user has actually consumed the first commodity. For ease of identifying the behavior of consuming the commodity by the user, the tag of the first commodity is arranged on an opening position of the first commodity. The opening position herein may be understood as a position that needs to be operated by the user for using the commodity. For example, for bottled water, the opening position is a bottom cover of the bottled water. For cigarettes, the opening position is an opening of the cigarette box. When the user consumes the commodity, the tag arranged on the opening position is damaged, and hence the tag scanning module fails to scan the tag of the commodity.

In some embodiments, to prevent malicious exchange of the tags of different commodities, the manager may use some fragile tags as the tags of the commodities. For example, the tag of the commodity includes a substrate and a signal circuit arranged on a side of the substrate. The substrate includes a release paper layer, a self-adhesive layer, a metal-resistant layer and a fragile paper layer that are sequentially arranged. When the user transfers the tag, the fragile paper layer is easily broken such that the signal circuit is damaged. Therefore, the tag is damaged.

The first generating module 34 is configured to generate order information of the first commodity if the tag of the first commodity is damaged.

The first sending module 35 is configured to send the order information of the first commodity to a server, such that the server deducts fees of the first commodity from an account of a user according to the order information of the first commodity. The order information of the first commodity includes price, name, category, quantity and the like of the first commodity.

In summary, in one aspect, when the user really consumes the first commodity, the tag of the first commodity may be damaged, and the damaged tag indicates that the user consumes the commodity. Therefore, the fees of the first commodity may be deduced from the account of the user. In another aspect, when the user exchanges commodities in different vending lattices, and the fees are accurately deduced by judging whether the re-arranged second commodity is consistent with the first commodity.

In some embodiments, as illustrated in FIG. 4, the device for automatic vending 200 further includes: a third detecting module 36, a second generating module 37 and a second sending module 38. The third detecting module 36 is configured to detect whether a tag of the second commodity is damaged. The second generating module 37 is configured to generate order information of the second commodity if the tag of the second commodity is damaged. The second sending module 38 is configured to send the order information of the second commodity to a server, such that the server deducts fees of the second commodity from an account of a user according to the order information of the second commodity. The order information of the second commodity includes price, name, category, quantity and the like of the second commodity.

In some embodiments, as illustrated in FIG. 5, the device for automatic vending 300 further includes: an updating module 39 and a first triggering module 40. The updating module 39 is configured to update a corresponding relationship between the vending lattice and the second commodity according to the tag of the second commodity if the tag of the second commodity is not damaged. The first triggering module 40 is configured to re-trigger scanning by the tag scanning module in the vending lattice.

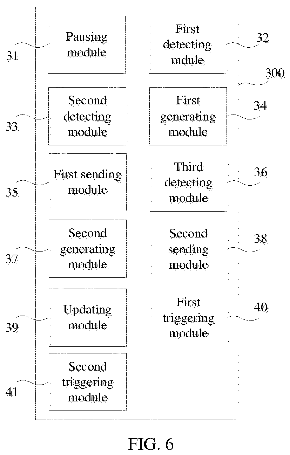

In some embodiments, as illustrated in FIG. 6, the device for automatic vending 300 further includes: a second triggering module 41, configured to re-trigger scanning by the tag scanning module in the vending lattice if the tag of the first commodity is not damaged.

According to the above embodiments of the present application, a person skilled in the art may clearly understand that the embodiments of the present application may implement the device for automatic vending 300 by means of hardware or by means of software plus a necessary general hardware platform. In addition, since the device for automatic vending 300 is practiced based on the same inventive concept as that of the automatic vending process. Without confliction of the content, the embodiments illustrating the device for automatic vending 300 may be referenced to the content in the above various embodiments, which is not described herein any further.

In summary, in one aspect, when the user really consumes the first commodity, the tag of the first commodity may be damaged, and the damaged tag indicates that the user consumes the commodity. Therefore, the fees of the first commodity may be deduced from the account of the user. In another aspect, when the user exchanges commodities in different vending lattices, and the fees are accurately deduced by judging whether the re-arranged second commodity is consistent with the first commodity.

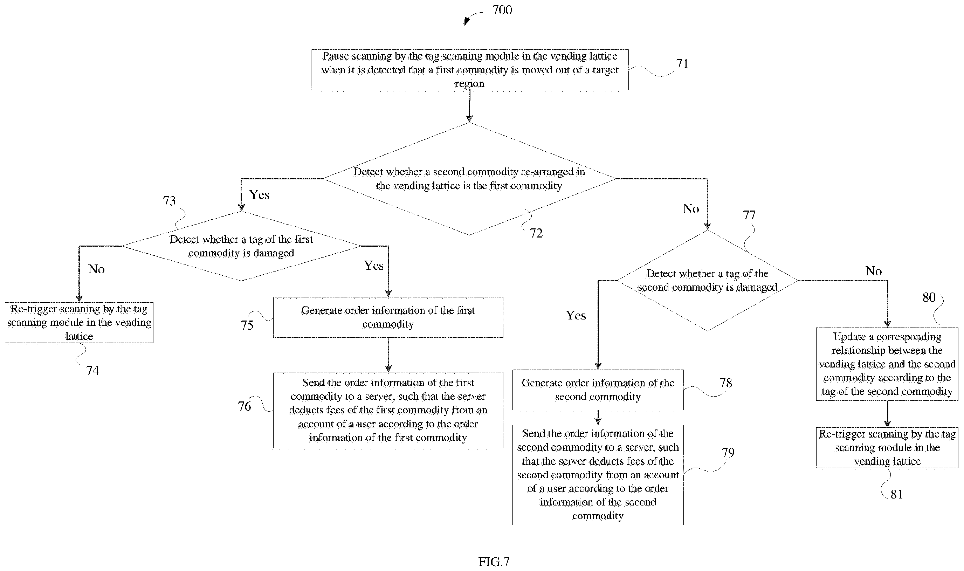

In another aspect, the embodiments of the present application further provide a method for automatic vending 700, which is applied to a vending container. The vending container is provided with a plurality of vending lattices, wherein each of the vending lattices is provided with a tag scanning module. As illustrated in FIG. 7, the method for automatic vending 700 includes the following steps:
step 71: pausing scanning by the tag scanning module in the vending lattice when it is detected that a first commodity is moved out of a target region;
step 72: detecting whether a second commodity re-arranged in the vending lattice is the first commodity;
step 73: detecting whether a tag of the first commodity is damaged if the second commodity re-arranged in the vending lattice is the first commodity;
step 74: re-triggering scanning by the tag scanning module in the vending lattice if the tag of the first commodity is not damaged;
step 75: generating order information of the first commodity if the tag of the first commodity is damaged;
step 76: sending the order information of the first commodity to a server, such that the server deducts fees of the first commodity from an account of a user according to the order information of the first commodity;
step 77: detecting whether a tag of the second commodity is damaged and performing step 78 if the second commodity re-arranged in the vending lattice is not the first commodity;
step 78: generating order information of the second commodity and performing step 79 if the tag of the second commodity is damaged;
step 79: sending the order information of the second commodity to a server, such that the server deducts fees of the second commodity from an account of a user according to the order information of the second commodity;
step 80: updating a corresponding relationship between the vending lattice and the second commodity according to the tag of the second commodity and performing step 81 if the tag of the second commodity is not damaged; and
step 81: re-triggering scanning by the tag scanning module in the vending lattice.

Firstly, the tag scanning module in the vending lattice constantly scans the first commodity with the tag according to a specific frequency, and the tag scanning module has a specific scanning range. The scanning range may be the target region. When the tag scanning module fails to scan the tag of the first commodity within a time period, the tag scanning module sends tag data to the vending terminal. The vending terminal detects that the first commodity in the vending lattice is moved out of the target region according to the tag data. In this case, to save power consumption, the vending terminal pauses scanning by the tag scanning module. Herein, the tag data may include commodity information, for example, price, name, category and the like of the first commodity.

The above embodiment only describes one optional manner of detecting whether the first commodity is moved away from the target region. Nevertheless, other alternative detection manners may also be used. For example, a camera is arranged in the vending lattice, wherein the camera photographs the target region of the vending lattice according to a predetermined frequency. When an image indicating that the user moves out the first commodity is picked up by the camera, the vending terminal parses an image of the first commodity by using an image analysis algorithm, so as to acknowledge that the first commodity is moved out.

As described above, when the user exchanges commodities in different vending lattices, to prevent some cheating behaviors, the vending terminal needs to detect whether a second commodity re-arranged in the vending lattice is the first commodity. In some embodiments, the vending terminal may detect whether the second commodity is re-arranged in the vending lattice by virtue of image analysis or pressure sensing. For example, the camera picks up again an image in the vending lattice. When the vending terminal detects features of a commodity according to the image, it is considered that the second commodity is re-arranged in the vending lattice. Still for example, when the second commodity is re-arranged in the vending lattice, a pressure sensor arranged at the bottom of the vending lattice detects a change of pressure. In this case, the vending terminal may consider that the second commodity is re-arranged in the vending lattice according to pressure change data fed back by the pressure sensor.

The second commodity may be the first commodity or may not be the first commodity. For example, the first commodity is purified water, and the second commodity is soda water. When the second commodity is the first commodity, the second commodity and the first commodity may belong to the same product series. For example, the first commodity is purified water with a white package, and the second commodity is purified water with a red package, but both the first commodity and the second commodity belong to the same category, purified water.

It should be noted that herein the terms "first" and "second" used as modifiers of commodities are merely intended to differentiate a sequence of arranging or picking up the commodities, and corresponding commodities based on the sequence of arranging or picking up the commodities.

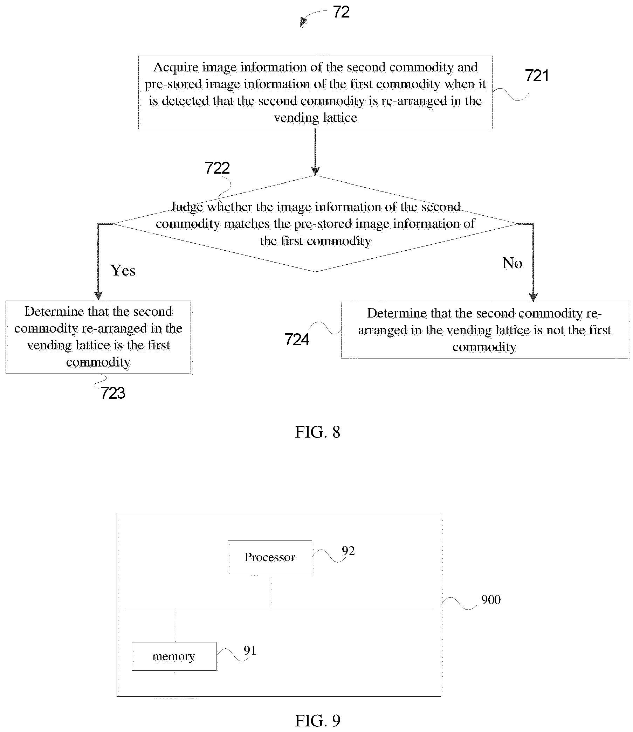

The vending terminal detects whether the second commodity re-arranged in the vending lattice is the first commodity. In some embodiments, as illustrated in FIG. 8, step 72 includes the following steps:
step 721: acquiring image information of the second commodity and pre-stored image information of the first commodity when it is detected that the second commodity is re-arranged in the vending lattice;
step 722: judging whether the image information of the second commodity matches the pre-stored image information of the first commodity;
step 723: determining that the second commodity re-arranged in the vending lattice is the first commodity if the image information of the second commodity matches the pre-stored image information of the first commodity; and
step 724: determining that the second commodity re-arranged in the vending lattice is not the first commodity if the image information of the second commodity does not match the pre-stored image information of the first commodity.

As described above, the tag scanning module constantly scans the tag of the commodity arranged in the vending lattice. When it is detected that the second commodity is re-arranged in the vending lattice and the second commodity is the first commodity, if the tag scanning module fails to receive feedback information of the tag of the first commodity, the tag scanning module sends information indicating that "the tag of the first commodity is damaged" to the vending terminal, and then the vending terminal generates order information of the first commodity. If the tag of the first commodity is not damaged, the vending terminal re-triggers scanning by the tag scanning module in the vending lattice.

If the tag of the first commodity is damaged, the user has actually consumed the first commodity. For ease of identifying the behavior of consuming the commodity by the user, the tag of the first commodity is arranged on an opening position of the first commodity. The opening position herein may be understood as a position that needs to be operated by the user for using the commodity. For example, for bottled water, the opening position is a bottom cover of the bottled water. For cigarettes, the opening position is an opening of the cigarette box. When the user consumes the commodity, the tag arranged on the opening position is damaged, and hence the tag scanning module scan the tag of the commodity.

In some embodiments, to prevent malicious exchange of the tags of different commodities, the manager may use some fragile tags as the tags of the commodities. For example, the tag of the commodity includes a substrate and a signal circuit arranged on a side of the substrate. The substrate includes a release paper layer, a self-adhesive layer, a metal-resistant layer and a fragile paper layer that are sequentially arranged. When the user transfers the tag, the fragile paper layer is easily broken such that the signal circuit is damaged. Therefore, the tag is damaged.

In summary, in one aspect, when the user really consumes the first commodity, the tag of the first commodity may be damaged, and the damaged tag indicates that the user consumes the commodity. Therefore, the fees of the first commodity may be deduced from the account of the user. In another aspect, when the user exchanges commodities in different vending lattices, and the fees are accurately deduced by judging whether the re-arranged second commodity is consistent with the first commodity.

As described above, if the tag of the second commodity is not damaged, the vending terminal updates a corresponding relationship between the vending lattice and the second commodity according to the tag of the second commodity, such that the vending terminal subsequently quickly determines commodity information of the second commodity according to the serial number of the vending lattice, and thus re-generates order information. For example, at the first time, the serial number 11 of the vending lattice corresponds to the first commodity, and in this case, the corresponding relationship is: 11-first commodity. After re-arrangement of the second commodity, the corresponding relationship is: 11-second commodity.

In the above various embodiments, the method for automatic vending is elaborated by using the vending terminal as an execution subject. In some embodiments, in addition to the vending terminal as the execution subject, other electronic devices may also be used as the execution subject to perform the method for automatic vending, which are not described herein any further.

In still another aspect, the embodiments of the present application provide a vending terminal 900. As illustrated in FIG. 9, the vending terminal 900 includes: a memory 91 and a processor 92. The processor 92 and the memory 91 may be connected via a bus or in another manner. FIG. 9 uses connection via a bus as an example. The memory, as a non-volatile computer readable storage medium, may be configured to store non-volatile software programs, non-volatile computer executable programs and modules, for example, the program instructions/modules corresponding to the method for automatic vending according to the embodiments of the present application. The non-volatile software programs, instructions and modules stored in the memory 91, when being executed, cause the processor 92 to perform various function applications and data processing of the method for automatic vending, that is, implementing the functions of the modules corresponding to the method for automatic vending according to the above method embodiment.

Therefore, in one aspect, when the user really consumes the first commodity, the tag of the first commodity may be damaged, and the damaged tag indicates that the user consumes the commodity. Therefore, the fees of the first commodity may be deduced from the account of the user. In another aspect, when the user exchanges commodities in different vending lattices, and the fees are accurately deduced by judging whether the re-arranged second commodity is consistent with the first commodity.

In addition, the memory 91 may include a high speed random access memory, or include a non-volatile memory, for example, at least one disk storage device, a flash memory device, or another non-volatile solid storage device. In some embodiments, the memory 91 optionally includes memories remotely configured relative to the processor 92. These memories may be connected to the processor 92 over a network. The above examples include, but not limited to, the Internet, Intranet, local area network, mobile communication network and a combination thereof.

The program instructions/modules are stored in the memory 91, which, when being executed by the processor 92, cause the processor 92 to perform the method for automatic vending according to any one of the above embodiments, for example, performing various method steps as described above.

An embodiment of the present application further provides a non-volatile computer-readable storage medium. The non-volatile computer-readable storage medium stores electronic device-executable instructions, which, when being executed by at least one processor, for example, the processor 92 as illustrated in FIG. 9, may cause the at least one processor to perform the method for automatic vending according to any of the above method embodiments, for example, the method for automatic vending according to the above method embodiment.

Therefore, in one aspect, when the user really consumes the first commodity, the tag of the first commodity may be damaged, and the damaged tag indicates that the user consumes the commodity. Therefore, the fees of the first commodity may be deduced from the account of the user. In another aspect, when the user exchanges commodities in different vending lattices, and the fees are accurately deduced by judging whether the re-arranged second commodity is consistent with the first commodity.

The above described device or device embodiments are merely for illustration purpose only. The modules and units which are described as separate components may be physically separated or may be not physically separated, and the components which are illustrated as modules and units may be or may not be physical modules and units, that is, the components may be located in the same position or may be distributed into a plurality of network modules and units. A part or all of the modules may be selected according to the actual needs to achieve the objectives of the technical solutions of the embodiments.

According to the above embodiments of the present application, a person skilled in the art may clearly understand that the embodiments of the present application may be implemented by means of hardware or by means of software plus a necessary general hardware platform. Based on such understanding, portions of the technical solutions of the present application that essentially contribute to the related art may be embodied in the form of a software product, the computer software product may be stored in a storage medium, such as a ROM/RAM, a magnetic disk, a CD-ROM and the like, including several instructions for causing a computer device (a personal computer, a server, or a network device) to perform the various embodiments of the present application, or certain portions of the method of the embodiments.

Finally, it should be noted that the above embodiments are merely used to illustrate the technical solutions of the present application rather than limiting the technical solutions of the present application. Under the concept of the present application, the technical features of the above embodiments or other different embodiments may be combined, the steps therein may be performed in any sequence, and various variations may be derived in different aspects of the present application, which are not detailed herein for brevity of description. Although the present application is described in detail with reference to the above embodiments, persons of ordinary skill in the art should understand that they may still make modifications to the technical solutions described in the above embodiments, or make equivalent replacements to some of the technical features; however, such modifications or replacements do not cause the essence of the corresponding technical solutions to depart from the spirit and scope of the technical solutions of the embodiments of the present application.

## Claims

1. A method for automatic vending, applied to a vending container, the vending container being provided with a plurality of vending lattices, each of the vending lattices being provided with a tag scanning module; wherein the method comprises:
pausing scanning by the tag scanning module in the vending lattice when it is detected that a first commodity is moved out of a target region;
detecting whether a second commodity re-arranged in the vending lattice is the first commodity;
detecting whether a tag of the first commodity is damaged if the second commodity re-arranged in the vending lattice is the first commodity;
generating order information of the first commodity if the tag of the first commodity is damaged; and
sending the order information of the first commodity to a server, such that the server deducts fees of the first commodity from an account of a user according to the order information of the first commodity.

2. The method according to claim 1, wherein the detecting whether a second commodity re-arranged in the vending lattice is the first commodity comprises:
acquiring image information of the second commodity and pre-stored image information of the first commodity when it is detected that the second commodity is re-arranged in the vending lattice;
determining whether the image information of the second commodity matches the pre-stored image information of the first commodity;
determining that the second commodity re-arranged in the vending lattice is the first commodity if the image information of the second commodity matches the pre-stored image information of the first commodity; and
determining that the second commodity re-arranged in the vending cabinet is not the first commodity if the image information of the second commodity does not match the pre-stored image information of the first commodity.

3. The method according to claim 2, wherein when it is determined that the second commodity re-arranged in the vending lattice is not the first commodity, the method further comprises:
detecting whether a tag of the second commodity is damaged;
generating order information of the second commodity if the tag of the second commodity is damaged; and
sending the order information of the second commodity to the server, such that the server deducts fees of the second commodity from the account of the user according to the order information of the second commodity.

4. The method according to claim 3, further comprising:
updating a corresponding relationship between the vending lattice and the second commodity according to the tag of the second commodity if the tag of the second commodity is not damaged; and
re-triggering scanning by the tag scanning module in the vending lattice.

5. The method according to any one of claims 1, further comprising:
re-triggering scanning by the tag scanning module in the vending lattice if the tag of the first commodity is not damaged.

6. The method according to claim 5, wherein the tag of the first commodity is arranged at an opening position of the first commodity.

7. A device for automatic vending, applied to a vending container, the vending container being provided with a plurality of vending lattices, each of the vending lattices being provided with a tag scanning module; wherein the device comprises:
a pausing module, configured to pause scanning by the tag scanning module in the vending lattice when it is detected that a first commodity is moved out of a target region;
a first detecting module, configured to detect whether a second commodity re-arranged in the vending lattice is the first commodity;
a second detecting module, configured to detect whether a tag of the first commodity is damaged if the second commodity re-arranged in the vending lattice is the first commodity;
a first generating module, configured to generate order information of the first commodity if the tag of the first commodity is damaged; and
a first sending module, configured to send the order information of the first commodity to a server, such that the server deducts fees of the first commodity from an account of a user according to the order information of the first commodity.

8. The device according to claim 7, wherein the first detecting module comprises:
a first acquiring unit, configured to acquire image information of the second commodity and pre-stored image information of the first commodity when it is detected that the second commodity is re-arranged in the vending lattice;
a judging unit, configured to judge whether the image information of the second commodity matches the pre-stored image information of the first commodity;
a first determining unit, configured to determine that the second commodity re-arranged in the vending lattice is the first commodity if the image information of the second commodity matches the pre-stored image information of the first commodity; and
a second determining unit, configured to determine that the second commodity re-arranged in the vending lattice is not the first commodity if the image information of the second commodity does not match the pre-stored image information of the first commodity.

9. A vending terminal, comprising:
at least one processor; and
a memory communicably connected to the at least one processor;
wherein the memory stores instructions executable by the at least one processor, wherein the instructions, when being executed by the at least one processor, cause the at least one processor to perform the method for automatic vending as defined in any one of claims 1 to 6.

10. A system for automatic vending, applied to a vending container, the vending container being provided with a plurality of vending lattices; wherein the system comprises:
a tag scanning module, arranged in each of the vending lattices and configured to scan a tag of a commodity;
a vending terminal as defined in claim 9; and
a server, configured to, in response to a verification request sent by a mobile terminal, send a verification code to the mobile terminal according to the verification request, such that the vending terminal opens a door of the vending lattice according to the verification code.

11. A non-transitory computer readable storage medium, wherein the computer readable storage medium stores computer executable instructions, which, when being executed by a computer, cause the computer to perform the method according to any one of claims 1 to 6.
